# EUROPÄISCHE PATENTSCHRIFT

(11) **EP 2 987 763 B1**
(45) Veröffentlichungstag und Bekanntmachung des Hinweises auf die Patenterteilung: **18.12.2019**
(21) Anmeldenummer: 15179005.2
(22) Anmeldetag: 30.07.2015
(51) Int. Cl.: B66F 9/22, B66F 17/00, B66F 9/075, G01G 19/08

(54) **VERFAHREN ZUR ÜBERWACHUNG AUF ÜBERLAST BEI EINEM FLURFÖRDERZEUG**
METHOD FOR MONITORING OVERLOAD IN AN INDUSTRIAL TRUCK
PROCEDE DE SURVEILLANCE DE SURCHARGE POUR UN CHARIOT DE MANUTENTION

(30) Priorität: 22.08.2014 DE 102014112063; 29.09.2014 DE 102014114114
(43) Veröffentlichungstag der Anmeldung: 24.02.2016
(73) Patentinhaber: Linde Material Handling GmbH, 63743 Aschaffenburg (DE)
(72) Erfinder: Francois, Yves-Jocelyn, 63739 Aschaffenburg (DE)
(74) Vertreter: Patentship Patentanwaltsgesellschaft mbH

(56) Entgegenhaltungen:
- JP-A- 2000 034 100
- JP-A- 2005 335 892
- JP-B2- 3 755 235
- US-A- 5 666 295

## Beschreibung

Die Erfindung betrifft ein Verfahren zur Überwachung auf Überlast bei einem Flurförderzeug. Insbesondere betrifft die Erfindung ein Verfahren zur Überwachung auf Überlast bei einem Flurförderzeug mit einem Hubmast sowie einer an dem Hubmast höhenbeweglich geführten Lastaufnahmevorrichtung, insbesondere einer Lastgabel, mit mindestens einem Hydraulikzylinder zum Anheben der Lastaufnahmevorrichtung, mit Drucksensormitteln zur Erfassung eines Lastdrucks, mit einer Bedienvorrichtung zum Eingeben von Steuerbefehlen zum Anheben/Senken der Lastaufnahmevorrichtung und mit einer Steuerung, wobei die Steuerung anhand des Lastdrucks bei einem Steuerbefehl zum Anheben erfasst, ob ein Wert entsprechend einer maximalen Last erreicht ist. Weiterhin betrifft die Erfindung ein weiteres Verfahren bei einem solchen Flurförderzeug mit einem kontinuierlich messenden Hubhöhensensor.

Bei Flurförderzeugen mit einer Lastaufnahmevorrichtung und einer Hubvorrichtung muss vermieden werden, dass eine unzulässig hohe Last angehoben wird. Dies gilt insbesondere für Gabelstapler in Form von Gegengewichtsgabelstaplern, die beim Aufnehmen einer zu großen Last instabil sein können, wenn das Lastmoment des Gegengewichts nicht mehr ausreicht, jedoch grundsätzlich auch für Schubmaststapler und andere Arten von Flurförderzeugen mit an einem Hubmast geführten Lastaufnahmevorrichtungen. Eine bekannte, häufig eingesetzte und somit standardmäßige Ausführungsform eines Gegengewichtsgabelstaplers weist dabei einen Standmast auf, an dem ein Ausfahrmast durch einen oder mehrere Hydraulikzylinder angehoben wird. Zugleich wird beispielsweise über eine Lastkette und eine Umlenkrolle, an dem Ausfahrmast eine Lastaufnahmevorrichtung, im Regelfall eine Lastgabel, durch denselben Hydraulikzylinder angehoben. Sobald eine Hubbewegung beginnt, werden sowohl die Lastaufnahmevorrichtung, wie auch der Ausfahrmast gleichzeitig angehoben.

Bei dieser zuletzt beschriebenen Form eines Gegengewichtsgabelstaplers kann die maximale, aufzunehmende Last dadurch begrenzt werden, dass ein Druckbegrenzungsventil in der Hydraulik auf einen entsprechenden Wert eingestellt wird. Wird versucht, eine zu große Last aufzunehmen, wäre ein höherer Lastdruck in der Hydraulik erforderlich, um den Hydraulikzylinder weiter herauszufahren, als das Druckbegrenzungsventil zulässt. Anstatt anzuheben, strömt lediglich Hydraulikfluid über das Druckbegrenzungsventil zurück in einen Tank.

Nachteilig an diesem Stand der Technik ist, dass bei einem Duplex- oder Triplexmast, der mehrere ausfahrende Mastschüsse aufweist und bei denen die ausfahrenden Mastschüsse in einer festgelegten Reihenfolge nacheinander ausfahren, ein Druckbegrenzungsventil auf einen so hohen Wert eingestellt werden müsste, dass die maximale Last und die Mastschüsse zusammen angehoben werden können. Dadurch kann eine funktionsfähige Überlastschutzfunktion erst in der letzten Maststufe bzw. wenn alle Ausfahrmasten ausgefahren sind erreicht werden, da dann durch die zulässige maximale Last der Abregeldruck des Druckbegrenzungsventil erreicht wird. Eine vorgeschlagene Lösung dieses Problems besteht darin, eine elektronische Überlastschutzfunktion vorzusehen, die anhand eines Lastdrucksignals der Hydraulik und zugleich eines Maststufenschaltsignals für jeden ausgefahrenen Mastschuss oder zugleich eines kontinuierlichen Hubhöhensignals bewertet, ob eine Überlast vorliegt und das weitere Anheben unterbindet. Dabei wird zusätzlich zu dem Lastdrucksignal auch das Maststufenschaltsignal oder das Hubhöhensignal bewertet. Sobald ein Mastschuss beginnt, auszufahren, wird durch das Maststufenschaltsignal, oder durch das Überschreiten eines entsprechenden Schwellenwertes bei einem Hubhöhensignal, das nun zusätzliche Gewicht dieses Mastschusses berücksichtigt, angepasst durch eine eventuelle Übersetzung der Kraft des Lastdrucks auf eine Hydraulikzylinderfläche und mechanische Kraftumsetzungen, wie etwa eine Lastkette. Es werden die somit wirksamen, zusätzlichen Gewichte der Mastschüsse und Mastteile berücksichtigt bei der Berechnung des aufliegenden Lastgewichtes.

An dieser vorgeschlagenen Lösung ist wiederum nachteilig, dass ein Erwärmen des Hydrauliksystems zum Aufheizen des Flurförderzeugs durch einen Betrieb der Hydraulik gegen das Druckbegrenzungsventil nicht mehr möglich ist. Bei einem kalten Hydraulikfluid ergibt sich oft ein unbefriedigendes Betriebsverhalten. Um das System schnell auf die Betriebstemperatur zu erwärmen, ist es möglich, die Lastaufnahmevorrichtung gegen den Anschlag bei maximalem Hub laufen zu lassen und weiterhin ein Signal zum Anheben zu geben. Dadurch wird mit maximaler Leistung von einer Hydraulikpumpe das Hydraulikfluid gefördert und über das Druckbegrenzungsventil in den Tank abgegeben. Diese künstlich erzeugte Verlustleistung führt zu einer schnellen Erwärmung des Hydraulikfluids, beispielsweise bei einer Inbetriebnahme des Flurförderzeugs im Winter innerhalb von wenigen Minuten.

Bei der vorgeschlagenen elektronischen Regelung des Überlastschutzes führt jedoch das Laufen gegen einen Anschlag zu der Meldung an die elektronische Regelung, dass eine extrem hohe Last vorliegt und somit die maximale Last überschritten ist. Das System schaltet wegen Überlast ab. Die dabei auftretende scheinbare Größe des Lastgewichtes wird entweder durch das Niveau eines Druckbegrenzungsventil begrenzt oder spätestens durch die obere Grenze des Messbereichs eines Drucksensors.

Möglichkeiten der Deaktivierung des Überlastschutzes durch eine besondere Betätigungsweise der Bedienungselemente für das Anheben oder zusätzliche Schalter sind nicht wünschenswert, da dies die Möglichkeit des Missbrauchs oder einer Fehlbedienung in sich birgt. Auch eine Überwachung und Schaltung anhand der Temperatur des Hydrauliksystem, um das Erwärmen durch einen Betrieb gegen das Druckbegrenzungsventil dennoch zu ermöglichen, ist nicht sehr vorteilhaft, da die Funktionsfähigkeit und Zuverlässigkeit fragwürdig ist sowie hierdurch Mehrkosten aufgrund der erforderlichen Temperatursensoren entstehen.

Die JP 2000 034100 A offenbart ein Verfahren gemäß dem Oberbegriff des Anspruchs 1 bzw. 7, wobei eine Lastbegrenzung durch ein sich bei einem zulässigen Maximaldruck öffnendes Hydraulikventil ausgeführt wird.

Der vorliegenden Erfindung liegt die Aufgabe zugrunde, ein Verfahren zur Überwachung auf Überlast bei einem Flurförderzeug zur Verfügung zu stellen, das die oben genannten Nachteile vermeidet und mit dem es insbesondere möglich ist, durch einen Betrieb gegen das Druckbegrenzungsventil das Hydrauliksystem zu erwärmen.

Diese Aufgabe wird durch ein Verfahren zur Überwachung auf Überlast bei einem Flurförderzeug mit den Merkmalen des unabhängigen Patentanspruchs 1 sowie des unabhängigen Patentanspruchs 7 gelöst. Vorteilhafte Weiterbildungen der Erfindung sind in den Unteransprüchen angegeben.

Die Aufgabe wird erfindungsgemäß dadurch gelöst, dass bei einem Verfahren zur Überwachung auf Überlast bei einem Flurförderzeug mit einem Hubmast sowie einer an dem Hubmast höhenbeweglich geführten Lastaufnahmevorrichtung, insbesondere einer Lastgabel, mit einem Hydraulikzylinder zum Anheben der Lastaufnahmevorrichtung, mit Drucksensormitteln zur Erfassung eines Lastdrucks, mit einer Bedienvorrichtung zum Eingeben von Steuerbefehlen zum Anheben/Senken der Lastaufnahmevorrichtung und mit einer Steuerung, wobei die Steuerung anhand des Lastdrucks bei einem Steuerbefehl zum Anheben erfasst, ob ein Wert entsprechend einer maximalen Last erreicht ist,
bei dem Verfahren bei einem Steuerbefehl zum Anheben der Lastaufnahmevorrichtung und einem Lastdruck entsprechend einer maximalen Last die Steuerung für einen Mindestzeitraum Druckmittel zuführt und anschließend die Zufuhr von Druckmittel stoppt, sowie nach dem Stopp der Druckmittelzufuhr beim Auftreten mindestens eines deutlichen Druckabfalls eine tatsächliche Hubbewegung und das Aufliegen einer Last erkennt.

Im Stillstand, wie auch bei einer konstanten Geschwindigkeit ist der Lastdruck proportional zur Zylinderkolbenfläche und der auf diese wirksamen Gesamtmasse unter Vernachlässigung von sekundären Effekten. Bei einer Beschleunigung entsteht ein zusätzlicher Lastdruck, der proportional zu dem Produkt aus Beschleunigung und Masse ist. Daher steigt bei einer sehr großen Masse, nahe der maximalen Last, schon bei einer geringen Beschleunigung der Lastdruck deutlich an. Beim Beschleunigen während eines Anhebens einer Last im Bereich der maximalen Last ist es jedoch wahrscheinlich, dass in dieser Situation der Lastdruck durch das Druckbegrenzungsventil abgeschnitten werden kann. Vorteilhaft kann durch das beschriebene Verfahren jedoch erfasst werden, ob tatsächlich eine Last aufliegt, da ein schnelles Stoppen der Druckmittelzufuhr immer möglich ist. Wenn eine Last mit einer Hubgeschwindigkeit angehoben wird, so bewegt sich diese aufgrund der Massenträgheit noch weiter, bis sie durch die Schwerkraft abgebremst wird. Dadurch kommt es zu einem markanten und deutlich zu erfassenden Druckabfall, da das hydraulische System kurz entlastet wird. Vorteilhaft kann dadurch die Steuerung erfassen, ob tatsächlich eine Überlast vorliegt oder ob die Lastaufnahmevorrichtung bei maximaler Hubhöhe gegen den Anschlag durch die Hydraulik weiter nach oben gedrückt wird, so dass das Druckbegrenzungsventil öffnet. In dem letzteren Fall ist keine Masse in Bewegung und sobald kein Druckmittel mehr zugeführt wird schließt das Druckbegrenzungsventil und hält das hydraulisches System konstant bei dessen Öffnungsdruck, ohne dass es zu einer kurzen Entlastung des hydraulischen Systems kommt. Vorteilhaft kann eine Überlast durch das Verfahren erkannt werden und es bleibt weiterhin möglich, das Hydrauliksystem bzw. auch einen Antriebsmotor beispielsweise eines Verbrennungsstaplers durch ein Anheben gegen den Anschlag des maximalen Hubes anzuwärmen, auch wenn die Begrenzung gegen das Anheben einer Überlast durch eine elektronische Steuerung erfolgt. Vorteilhaft ist, dass kein Hubhöhensensor mit einer kontinuierlichen Erfassung der Hubhöhe erforderlich ist, um eine tatsächliche Hubbewegung festzustellen.

Vorteilhaft erkennt die Steuerung beim Vorliegen einer im Wesentlichen konstanten Linie des Lastdrucks nach dem Stopp der Druckmittelzufuhr ein Anheben gegen den Anschlag.

Das Druckbegrenzungsventil schließt mit einer sehr kurzen Zeitkonstante und da es keine kurzzeitige Entlastung des Hydrauliksystems durch eine sich weiter bewegende Last und somit einen nachgebenden Hydraulikzylinderkolben gibt, wird der Öffnungsdruck des Druckbegrenzungsventils gehalten.

In einer günstigen Ausgestaltung des Verfahrens erfasst die Steuerung bei dem deutlichen Druckabfall das Unterschreiten des Wertes des Lastdrucks vor Beginn der Zufuhr des Druckmittels.

Bei einem Anheben einer Last werden auch Gewichtsanteile des Hubmastes mit angehoben. Beispiele hierfür sind eine Lastaufnahmevorrichtung oder bei einem mehrschüssigen Mast ausfahrende Mastschüsse. Auch diese bewegen sich mit der Last aufgrund der Massenträgheit noch weiter und es kann daher zu einer Entlastung des hydraulischen Systems bis unterhalb des Lastdrucks kommen, der vor Beginn des Anhebens bzw. versuchten Aufnehmens der Last als Gleichgewichtsdruck herrschte. Hieran kann die Steuerung besonders gut eine tatsächliche Hubbewegung erkennen.

Die Steuerung kann bei dem deutlichen Druckabfall eine periodische Abfolge von mehreren aufeinanderfolgenden und in Form einer gedämpften Schwingung auftretenden Minima bzw. Maxima des Lastdrucks erfassen.

Das Hydrauliksystem mit seinen Schläuchen, Rohrleitungen usw. bildet ein elastisches, federndes System und wenn die aufgenommene Last nach dem Stopp der Hubbewegung sich bei entlasteten Hydrauliksystem wieder nach unten bewegt, wird das Hydraulikfluid komprimiert und es kommt zu einer abklingenden Schwingungsbewegung, bis der Lastdruck sich auf eine Gleichgewichtslage im Stillstand einstellt. Eine solche Abfolge von Minima und Maxima bzw. ein Abklingen der Schwingung kann gut erfasst werden und ist ein Anzeichen für eine tatsächliche vorherige Hubbewegung, durch deren Stopp die Schwingung angeregt wurde.

In einer Weiterbildung des Verfahrens ist der Mindestzeitraum zumindest so lange bemessen, wie das Beschleunigen einer maximalen Last bei vollem Signal der Betätigungsvorrichtung bei einem Anheben dauert.

Sobald keine weitere Beschleunigung eintritt, kann der maximale Effekt bei einem Stopp der Hubbewegung erreicht werden. Der Mindestzeitraum als die Zeitdauer, in der Hydraulikfluid zugeführt wird und es auch im Falle einer Überlast zu einer tatsächlichen, jedoch minimalen Hubbewegung kommt, sollte möglichst gering gehalten werden. Dieser Zeitraum kann beispielsweise dadurch bestimmt werden, dass das Erreichen der maximalen Hubgeschwindigkeit bzw. auch einer bereits für die Erzeugung eines deutlichen Druckabfalls erforderliche Hubgeschwindigkeit abhängig von dem maximalen Lastgewicht und der von der Hubvorrichtung aufbringbaren Kraft berechnet wird.

In einer günstigen Ausgestaltung des Verfahrens kann der Hubmast zumindest einen weiteren Mastschuss aufweisen und die Steuerung ein Schaltsignal eines Maststufenschalters erhalten, der das Ausfahren des weiteren Mastschusses erfasst.

Durch das beschriebene Verfahren kann eine elektronische Überprüfung auf Überlast vorgenommen werden durch eine Steuerung. Dadurch kann auch bei einem Mast mit mehreren Mastschüssen und Mastanteilen mit einem erheblichen Eigengewicht stets eine genaue Messung auf Überlast erfolgen, indem Gewichtsanteile von ausgefahrenen Mastschüssen berücksichtigt werden. Hierzu kann die Steuerung durch einen Maststufenschalter ein Signal erhalten, wenn ein Mastschuss ausgefahren ist und somit ebenfalls durch seine Gewichtskraft zum Lastdruck beiträgt. Dabei ist es auch denkbar, dass beispielsweise bei einem Triplexmast nur das Ausfahren des mittleren Mastschusses durch einen Maststufenschalter erfasst sowie berücksichtigt wird. Zur Vereinfachung kann beim ersten, obersten Mastschuss bei vollständig ausgefahrenen Mastschubes hingenommen werden, dass bereits ein Auslösen bei einem geringeren als dem theoretisch möglichen Lastgewicht erfolgt.

Die Aufgabe wird alternativ auch gelöst durch ein Verfahren zur Überwachung auf Überlast bei einem Flurförderzeug mit einem Hubmast sowie einer an dem Hubmast höhenbeweglich geführten Lastaufnahmevorrichtung, insbesondere einer Lastgabel, mit einem Hydraulikzylinder zum Anheben der Lastaufnahmevorrichtung, mit Drucksensormitteln zur Erfassung eines Lastdrucks, mit einer Bedienvorrichtung zum Eingeben von Steuerbefehlen zum Anheben/Senken der Lastaufnahmevorrichtung, mit einem kontinuierlich messenden Hubhöhensensor und mit einer Steuerung, wobei die Steuerung anhand des Lastdrucks bei einem Steuerbefehl zum Anheben erfasst, ob ein Wert entsprechend einer maximalen Last erreicht ist, wobei bei einem Steuerbefehl zum Anheben der Lastaufnahmevorrichtung und einem Lastdruck entsprechend einer maximalen Last die Steuerung das Aufliegen einer Last erkennt, wenn das Signal des Hubhöhensensors eine tatsächliche Hubbewegung anzeigt.

Auch dieses Verfahren hat die bereits zuvor beschriebenen Vorteile, dass trotz einer elektronischen Überwachung auf Überlast weiterhin ein Erwärmen des Hydrauliksystems mithilfe des Druckbegrenzungsventils möglich ist. Wenn ein Hubhöhensensor mit einer kontinuierlichen Erfassung der Hubhöhe zur Verfügung steht, lässt sich auf diese Weise das Verfahren einfach umsetzen.

Vorteilhaft wird, wenn die Steuerung eine tatsächliche Hubbewegung und das Aufliegen einer Last erkennt, ein Anheben von der Steuerung blockiert, bis die Bedienvorrichtung mindestens einmal in eine neutrale Stellung zurück verbracht wird.

Es kann, wenn die Steuerung keine tatsächliche Hubbewegung erkennt, nachfolgend weiter Druckmittel gefördert werden.

Dadurch kann für einen Bediener kaum merklich ein Erwärmen des Hydrauliksystems durchgeführt werden, nachdem zuvor überprüft wurde, ob die
Lastaufnahmevorrichtung gegen den Anschlag des maximalen Hubs gelaufen ist, oder ob versucht wurde, eine gegebenenfalls zu schwere Last anzuheben.

Ein Signal des Lastdrucks kann von der Steuerung gefiltert werden.

Dadurch wird das Signal geglättet und es wird vermieden, dass einzelne sehr kurze Signalspitzen zu fehlerhaften Bewertungen führen.

Vorteilhaft ist ein deutlicher Druckabfall ein Druckabfall um mindestens 5 bar und/oder 2% des Drucks.

Ein typischerweise auftretender maximaler Druck, der durch das Druckbegrenzungsventil festgelegt ist, liegt bei ca. 250 bar. Ein deutlicher Druckabfall, der das Aufliegen einer tatsächlichen Last anzeigt liegt dann vor, wenn ein Schwellenwert von 5 bar überschritten wird. Dies entspricht 2 % des zuvor anliegenden Drucks.

Weitere Vorteile und Einzelheiten der Erfindung werden anhand des in den schematischen Figuren dargestellten Ausführungsbeispiels näher erläutert. Hierbei zeigt
- Fig. 1: in einem Diagramm Hubgeschwindigkeit und Lastdruck über der Zeit ohne eine Hubbewegung und
- Fig. 2: in einem Diagramm Hubgeschwindigkeit und Lastdruck über der Zeit bei einer Hubbewegung.

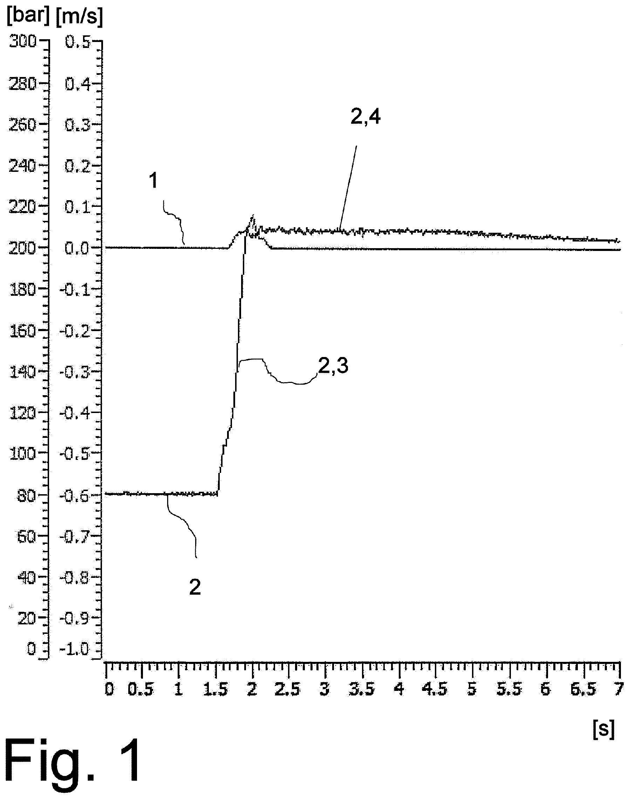

Die Fig. 1 zeigt in einem Diagramm Hubgeschwindigkeit 1 und Lastdruck 2 über der Zeit ohne eine Hubbewegung. Dabei ist der Lastdruck 2 in einer Skala von 0 bis 300 in bar angegeben und die Hubgeschwindigkeit v um eine Null-Linie als positiver oder negativer Wert in m/s. Als Rechtswert ist die Zeit in Sekunden s aufgetragen. In einem Zeitraum beginnend bei ca. 1,75 Sekunden bis ca. 2,25 Sekunden wird Hydraulikfluid dem Hydraulikzylinder bei einem Steuerbefehle zum Anheben zugeführt, ohne dass es dadurch wegen zu großen Widerstandes im Rahmen der Messgenauigkeit zu einer größeren Hubbewegung oder Hubgeschwindigkeit kommt. Gleichzeitig steigt der Lastdruck 1 an einer steilen Kante 3 rasch an, bis ein Plateaudruck 4 erreicht ist, an dem das Druckbegrenzungsventil bei ca. 210 bar öffnet. Sobald kein Druckmittel mehr zugeführt wird, beim Zeitpunkt von ca. 5 Sekunden bei der Messung schließt das Druckbegrenzungsventil. Der Lastdruck 1 bleibt jedoch auf der Höhe des Plateaudrucks 4. An diesem Verlauf des Lastdrucks 2 kann von der Steuerung erkannt werden, dass keine tatsächliche Hubbewegung stattfindet und die Hubvorrichtung gegen einen so großen Widerstand anläuft, wie beispielsweise den Anschlag bei maximalem Hub, und somit ein Anheben gegen ein Druckbegrenzungsventil stattfindet.

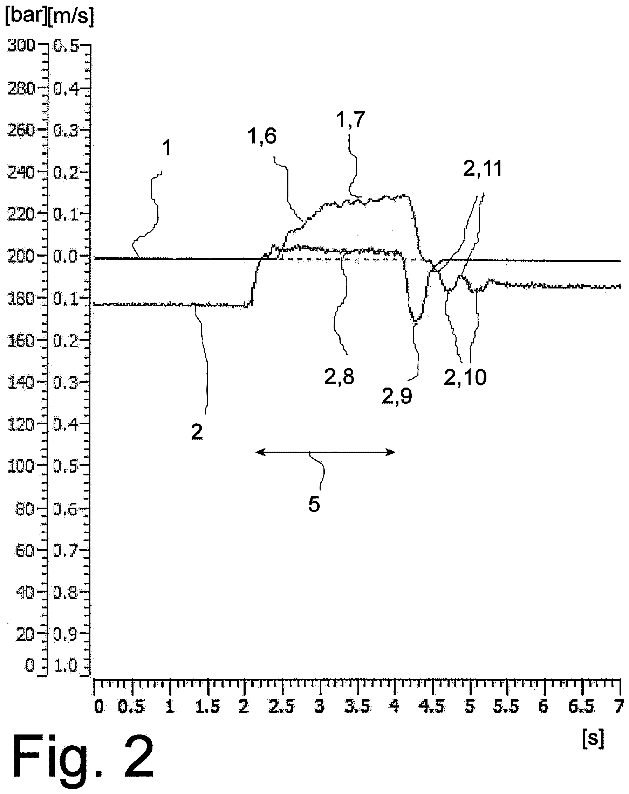

Die Fig. 2 zeigt in einem Diagramm die Hubgeschwindigkeit 1 und den Lastdruck 2 über der Zeit bei einer Hubbewegung. Der Lastdruck 2 ist in einer Skala von 0 bis 300 bar angegeben und die Hubgeschwindigkeit 1 um eine Null-Linie als positiver oder negativer Wert in m/s. Als Rechtswert ist die Zeit in Sekunden s aufgetragen. In einem Zeitraum beginnend bei ca. 2 Sekunden bis ca. 4 Sekunden als Mindestzeitraum 5 wird von der Steuerung bei einem Steuerbefehle von der Bedienvorrichtung Hydraulikfluid dem Hydraulikzylinder zugeführt. Bei dem Zeitpunkt von ca. 4 Sekunden wird die Zufuhr gestoppt. Dadurch steigt die Geschwindigkeit 1 in einem Beschleunigungsbereich 6 an, bis eine konstante Hubgeschwindigkeit 7 vorliegt, die nach dem Zeitpunkt von 4 Sekunden rasch wieder auf Null abfällt.

Der Lastdruck 2 steigt fast unmittelbar auf einem Plateaudruck 8 an, der knapp oberhalb von 200 bar liegt und an dem auch hier das Druckbegrenzungsventil öffnet. Nach dem Stopp zeigt sich ein Druckabfall 9. In dem hier vorliegenden Beispielsfall fällt dieser Druckabfall 9 sogar bis unterhalb des ursprünglichen Ausgangswertes des Lastdrucks 2 ab, wobei dies für das beschriebene Verfahren nicht zwingend erforderlich ist. Nachfolgend ergeben sich weitere Minima 10 und Maxima 11 des Lastdrucks 2, bis der Lastdruck 2 in einer gedämpften Schwingung abgeklungen ist. An dem Druckabfall 9 gegenüber dem Plateaudruck 8 und daneben oder alternativ an den Minima 10 sowie Maxima 11 kann eine Steuerung erfassen, dass tatsächlich eine Hubbewegung mit einer Hubgeschwindigkeit 7 ungleich Null vorliegt.

Vorteilhaft kann dadurch sowohl ein sicheres Abschalten bei Überlast, als auch die Möglichkeit der Erwärmung des Hydrauliksystems durch ein Fördern von Hydraulikfluid gegen das Druckbegrenzungsventil erreicht werden.

## Patentansprüche

1. Verfahren zur Überwachung auf Überlast bei einem Flurförderzeug mit einem Hubmast sowie einer an dem Hubmast höhenbeweglich geführten Lastaufnahmevorrichtung, insbesondere einer Lastgabel, mit mindestens einem Hydraulikzylinder zum Anheben der Lastaufnahmevorrichtung, mit Drucksensormitteln zur Erfassung eines Lastdrucks (2,4,8), mit einer Bedienvorrichtung zum Eingeben von Steuerbefehlen zum Anheben/Senken der Lastaufnahmevorrichtung und mit einer Steuerung, wobei die Steuerung anhand des Lastdrucks (2,4,8) bei einem Steuerbefehl zum Anheben erfasst, ob ein Wert entsprechend einer maximalen Last erreicht ist,
**dadurch gekennzeichnet,**
**dass** bei einem Steuerbefehl zum Anheben der Lastaufnahmevorrichtung und einem Lastdruck (4,8) entsprechend einer maximalen Last die Steuerung für einen Mindestzeitraum (5) Druckmittel zuführt und anschließend die Zufuhr von Druckmittel stoppt sowie nach dem Stopp der Druckmittelzufuhr beim Auftreten mindestens eines deutlichen Druckabfalls (9) eine tatsächliche Hubbewegung und das Aufliegen einer Last erkennt.

2. Verfahren nach Anspruch 1,
**dadurch gekennzeichnet,**
**dass** die Steuerung beim Vorliegen einer im Wesentlichen konstanten Linie des Lastdrucks (4) nach dem Stopp der Druckmittelzufuhr ein Anheben gegen den Anschlag erkennt.

3. Verfahren nach Anspruch 1 oder 2,
**dadurch gekennzeichnet,**
**dass** die Steuerung bei dem deutlichen Druckabfall (9) das Unterschreiten des Wertes des Lastdrucks (2) vor Beginn der Zufuhr des Druckmittels erfasst.

4. Verfahren nach einem der Ansprüche 1 bis 3,
**dadurch gekennzeichnet,**
**dass** die Steuerung bei dem deutlichen Druckabfall (9) eine periodische Abfolge von mehreren aufeinanderfolgenden und in Form einer gedämpften Schwingung auftretenden Minima (10) bzw. Maxima (11) des Lastdrucks erfasst.

5. Verfahren nach einem der Ansprüche 1 bis 4,
**dadurch gekennzeichnet,**
**dass** der Mindestzeitraum (5) zumindest so lange bemessen ist, wie das Beschleunigen (6) einer maximalen Last bei vollem Signal der Betätigungsvorrichtung bei einem Anheben dauert.

6. Verfahren nach einem der Ansprüche 1 bis 5,
**dadurch gekennzeichnet,**
**dass** der Hubmast zumindest einen weiteren Mastschuss aufweist und die Steuerung ein Schaltsignal eines Maststufenschalters erhält, der das Ausfahren des weiteren Mastschusses erfasst.

7. Verfahren zur Überwachung auf Überlast bei einem Flurförderzeug mit einem Hubmast sowie einer an dem Hubmast höhenbeweglich geführten Lastaufnahmevorrichtung, insbesondere einer Lastgabel, mit einem Hydraulikzylinder zum Anheben der Lastaufnahmevorrichtung, mit Drucksensormitteln zur Erfassung eines Lastdrucks (2,4,8), mit einer Bedienvorrichtung zum Eingeben von Steuerbefehlen zum Anheben/Senken der Lastaufnahmevorrichtung, mit einem kontinuierlich messenden Hubhöhensensor und mit einer Steuerung, wobei die Steuerung anhand des Lastdrucks (2,4,8) bei einem Steuerbefehl zum Anheben erfasst, ob ein Wert entsprechend einer maximalen Last erreicht ist,
**dadurch gekennzeichnet,**
**dass** bei einem Steuerbefehl zum Anheben der Lastaufnahmevorrichtung und einem Lastdruck entsprechend einer maximalen Last (4,8) die Steuerung das Aufliegen einer Last erkennt, wenn das Signal des Hubhöhensensors eine tatsächliche Hubbewegung anzeigt.

8. Verfahren nach einem der Ansprüche 1 bis 7,
**dadurch gekennzeichnet,**
**dass** wenn die Steuerung eine tatsächliche Hubbewegung und das Aufliegen einer Last erkennt, ein Anheben von der Steuerung blockiert wird, bis die Bedienvorrichtung mindestens einmal in eine neutrale Stellung zurück verbracht wird.

9. Verfahren nach einem der Ansprüche 1 bis 8,
**dadurch gekennzeichnet,**
**dass** wenn die Steuerung keine tatsächliche Hubbewegung erkennt, nachfolgend weiter Druckmittel gefördert wird.

10. Verfahren nach einem der Ansprüche 1 bis 9,
**dadurch gekennzeichnet,**
**dass** ein Signal des Lastdrucks (2,4,8) von der Steuerung gefiltert wird.

11. Verfahren nach einem der Ansprüche 1 bis 10,
**dadurch gekennzeichnet,**
**dass** ein deutlicher Druckabfall ein Druckabfall um mindestens 5 bar und/oder 2% des Drucks ist.

## Claims

1. Method for monitoring overload in an industrial truck having a lifting mast and a load receiving device guided such that it can be moved vertically on the lifting mast, in particular a load fork, having at least one hydraulic cylinder for raising the load receiving device, having pressure sensor means for measuring a load pressure (2, 4, 8), having an operating device for entering control commands to raise/lower the load receiving device, and having a controller, wherein the controller detects by using the load pressure (2, 4, 8) whether a value corresponding to a maximum load has been reached during a raise control command,
**characterized in that,**
during a control command to raise the load receiving device and with a load pressure (4, 8) corresponding to a maximum load, the controller supplies pressure medium for a minimum time period (5) and then stops the supply of pressure medium and, following the stoppage of the pressure medium supply, upon the occurrence of at least one considerable pressure drop (9), detects an actual lifting movement and the application of a load.

2. Method according to Claim 1,
**characterized in that,**
in the event that a substantially constant line of the load pressure (4) is present following the stoppage of the pressure medium supply, the controller detects a lift against the stop.

3. Method according to Claim 1 or 2,
**characterized in that,**
in the event of the considerable pressure drop (9), the controller detects that the value of the load pressure (2) was undershot before the start of the supply of the pressure medium.

4. Method according to one of Claims 1 to 3,
**characterized in that,**
in the event of the considerable pressure drop (9), the controller detects a periodic sequence of multiple successive minima (10) and maxima (11) of the load pressure, occurring in the form of a damped oscillation.

5. Method according to one of Claims 1 to 4,
**characterized in that**
the minimum time period (5) is dimensioned to be at least as long as the acceleration (6) of a maximum load in the event of a full signal from the actuating device during a lift.

6. Method according to one of Claims 1 to 5,
**characterized in that**
the lifting mast has at least one further mast section, and the controller receives a switching signal from a mast step switch, which detects the extension of the further mast section.

7. Method for monitoring overload in an industrial truck having a lifting mast and a load receiving device guided such that it can be moved vertically on the lifting mast, in particular a load fork, having a hydraulic cylinder for raising the load receiving device, having pressure sensor means for measuring a load pressure (2, 4, 8), having an operating device for entering control commands to raise/lower the load receiving device, having a continuously measuring lift height sensor, and having a controller, wherein the controller detects by using the load pressure (2, 4, 8) whether a value corresponding to a maximum load has been reached during a raise control command,
**characterized in that,**
during a control command to raise the load receiving device and with a load pressure corresponding to a maximum load (4, 8), the controller detects the application of a load when the signal from the lift height sensor displays an actual lifting movement.

8. Method according to one of Claims 1 to 7,
**characterized in that,**
when the controller detects an actual lifting movement and the application of a load, a lift is blocked by the controller until the operating device has been brought back at least once into a neutral position.

9. Method according to one of Claims 1 to 8,
**characterized in that,**
when the controller detects that there is no actual lifting movement, pressure medium subsequently continues to be delivered.

10. Method according to one of Claims 1 to 9,
**characterized in that,**
a load pressure (2, 4, 8) signal is filtered by the controller.

11. Method according to one of Claims 1 to 10,
**characterized in that,**
a considerable pressure drop is a pressure drop by at least 5 bar and/or 2% of the pressure.

## Revendications

1. Procédé de surveillance de surcharge pour un chariot de manutention comportant un mât de levage et un dispositif de prise de charge, en particulier une fourche de charge, guidé de manière mobile verticalement sur le mât de levage, au moins un vérin hydraulique pour le levage du dispositif de prise de charge, des moyens capteurs de pression pour détecter une pression de charge (2, 4, 8), comportant un dispositif de manipulation permettant de fournir des ordres de commande pour lever/abaisser le dispositif de prise de charge et une unité de commande, dans lequel l'unité de commande détecte, sur la base de la pression de charge (2, 4, 8), si une valeur correspondant à une charge maximale est atteinte lorsqu'un ordre de commande de levage est émis, **caractérisé en ce que**, dans le cas d'un ordre de commande de levage du dispositif de prise de charge et d'une pression de charge (4, 8) correspondant à une charge maximale, l'unité de commande délivre un fluide sous pression pendant un intervalle de temps minimal (5) et arrête ensuite l'alimentation en fluide sous pression et détecte, après l'arrêt de l'alimentation en fluide sous pression, un mouvement de levage effectif et l'application d'une charge lorsqu'il se produit au moins une chute de pression importante (9).

2. Procédé selon la revendication 1,
**caractérisé en ce que** l'unité de commande détecte un soulèvement contre la butée en présence d'une courbe sensiblement constante de la pression de charge (4) après l'arrêt de l'alimentation en fluide sous pression.

3. Procédé selon la revendication 1 ou 2, **caractérisé en ce que** lors d'une chute de pression importante (9), l'unité de commande détecte que la pression de charge (2) s'abaisse en-dessous de la valeur observée avant le début de l'alimentation en fluide sous pression.

4. Procédé selon l'une des revendications 1 à 3, **caractérisé en ce que**, lors d'une chute de pression importante (9), l'unité de commande détecte une séquence périodique de plusieurs minima (10) ou maxima (11) successifs de la pression de charge qui se présentent sous la forme d'une oscillation amortie.

5. Procédé selon l'une des revendications 1 à 4, **caractérisé en ce que** l'intervalle de temps minimal (5) est dimensionné de manière à ce qu'il dure au moins aussi longtemps que l'accélération (6) d'une charge maximale lorsque le dispositif d'actionnement produit un signal maximum lors d'un levage.

6. Procédé selon l'une des revendications 1 à 5, **caractérisé en ce que** le mât de levage comporte au moins un autre élément de mât et **en ce que** l'unité de commande reçoit un signal de commutation d'un interrupteur de section de mât qui détecte le déploiement dudit autre élément de mât.

7. Procédé de surveillance de surcharge pour un chariot de manutention comportant un mât de levage et un dispositif de prise de charge, en particulier une fourche de charge, guidé de manière mobile verticalement sur le mât de levage, un vérin hydraulique pour le levage du dispositif de prise de charge, des moyens capteurs de pression pour détecter une pression de charge (2, 4, 8), un dispositif de manipulation permettant de fournir des ordres de commande pour lever/abaisser le dispositif de prise de charge, un capteur de hauteur de levage effectuant une mesure continue et une unité de commande, dans lequel l'unité de commande détecte, sur la base de la pression de charge (2, 4, 8), si une valeur correspondant à une charge maximale est atteinte lorsqu'un ordre de commande de levage est émis,
**caractérisé en ce que**, dans le cas d'un ordre de commande de levage du dispositif de prise de charge et d'une pression de charge correspondant à une charge maximale (4, 8), l'unité de commande détecte l'application d'une charge lorsque le signal du capteur de hauteur de levage indique un mouvement de levage effectif.

8. Procédé selon l'une des revendications 1 à 7, **caractérisé en ce que** lorsque l'unité de commande détecte un mouvement de levage effectif et l'application d'une charge, le levage est bloqué par la commande jusqu'à ce que le dispositif de manipulation soit ramené au moins une fois en position neutre.

9. Procédé selon l'une des revendications 1 à 8, **caractérisé en ce que** lorsque la commande ne détecte aucun mouvement de levage effectif, d'autres moyens de pression sont ensuite mis en œuvre.

10. Procédé selon l'une des revendications 1 à 9, **caractérisé en ce qu'**un signal de la pression de charge (2, 4, 8) est filtré par l'unité de commande.

11. Procédé selon l'une des revendications 1 à 10, **caractérisé en ce qu'**une chute de pression importante est une chute de pression d'au moins 5 bars et/ou de 2% de la pression.
